## Europäisches Patentamt
## European Patent Office
## Office européen des brevets

(11) Veröffentlichungsnummer: **0 447 999 B1**

# EUROPÄISCHE PATENTSCHRIFT

(45) Veröffentlichungstag der Patentschrift: **28.06.95**

(51) Int. Cl.6: **C08G 81/02**, C08G 12/40, C08F 8/00

(21) Anmeldenummer: **91104092.1**

(22) Anmeldetag: **16.03.91**

(54) **Wässrige Bindemitteldispersion.**

(30) Priorität: **23.03.90 DE 4009413**

(43) Veröffentlichungstag der Anmeldung:
**25.09.91 Patentblatt 91/39**

(45) Bekanntmachung des Hinweises auf die
Patenterteilung:
**28.06.95 Patentblatt 95/26**

(84) Benannte Vertragsstaaten:
**AT BE CH DE DK ES FR GB IT LI NL SE**

(56) Entgegenhaltungen:
EP-A- 0 047 910     AT-B- 357 763
CH-A- 322 878     DE-A- 2 635 732
DE-C- 733 710     US-A- 4 461 858

(73) Patentinhaber: **BASF Aktiengesellschaft**
**Carl-Bosch-Strasse 38**
**D-67063 Ludwigshafen (DE)**

(72) Erfinder: **Gulbins, Erich, Dr.**
**Ladenburger Strasse 80**
**W-6900 Heidelberg (DE)**
Erfinder: **Zosel, Albrecht, Dr.**
**Ringweg 9**
**W-6940 Weinheim (DE)**
Erfinder: **Ley, Gregor, Dr.**
**In den Trankstuecken**
**W-6719 Wattenheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft wäßrige Bindemitteldispersionen, erhältlich durch Umsetzung von

a) 1 Gewichtsteil eines wasserlöslichen Aminoplastharzes oder dessen Ausgangsverbindungen (Komponente I) mit

b) 0,5 bis 20 Gewichtsteilen eines in wäßriger Dispersion vorliegenden Copolymeren (Komponente II), welches pro kg 0,005 bis 5,0 Mol reaktive Gruppen enthält, die mit den reaktiven Gruppen der Komponente I eine Kondensations- oder Additionsreaktion eingehen können,

in schwach saurem oder basischen Milieu bis zu einem Umsetzungsgrad, bei dem mindestens 10 Gew.-% der Komponente I aus der wäßrigen Lösung in die disperse Phase übergegangen sind und dessen Obergrenze dadurch definiert ist, daß die erhaltene Dispersion gerade noch filmbildend ist.

Darüber hinaus betrifft die Erfindung ein Verfahren zur Herstellung der wäßrigen Bindemitteldispersionen sowie ihre Verwendung zur Herstellung von härtbaren Zubereitungen für die Beschichtung von Oberflächen und zur Herstellung von Verbundwerkstoffen.

Wäßrige Bindemitteldispersionen, die wasserlösliche Vorkondensate aminoplastischer Bindemittel und in Dispersion vorliegende Copolymere enthalten, werden für die Beschichtung von Metall- oder Holzoberflächen eingesetzt. Bekannt sind solche Bindemitteldispersionen z.B. aus der DE-A-2 635 732 und der DE-A-733 710.

Die Aushärtung des Bindemittels erfolgt nach der Beschichtung von Oberflächen bei erhöhter Temperatur, gegebenenfalls unter Zusatz eines Härtungsbeschleunigers wie Ammoniumchlorid, der durch saure Katalyse die Vernetzungsreaktionen beschleunigt. Vor allem für die Beschichtung von Metalloberflächen besteht ein Bedarf an Bindemitteldispersionen, die auch ohne Zusatz von korrodierend wirkenden, sauren Härtungsbeschleunigern bei nicht zu hohen Härtungstemperaturen Beschichtungen mit gutem Eigenschaftsniveau ergeben.

Es bestand daher die Aufgabe, wäßrige Bindemitteldispersionen mit verbesserter Reaktivität und guten anwendungstechnischen Eigenschaften zur Verfügung zu stellen.

Demgemäß wurden die eingangs definierten wäßrigen Bindemitteldispersionen, ein Verfahren zu ihrer Herstellung und ihre Verwendung zur Herstellung von härtbaren Zubereitungen zur Beschichtung von Oberflächen und zur Herstellung von Verbundwerkstoffen gefunden.

Bevorzugte Ausführungsformen sind den Unteransprüchen zu entnehmen.

Bei den wasserlöslichen Aminoplastharzen oder deren Ausgangsverbindungen (Komponente I) handelt es sich um allgemein bekannte, mindestens bifunktionelle Amino- oder Amido-Verbindungen (Ia) und Carbonylverbindungen (Ib) oder deren bekannte Kondensationsprodukte.

Von Bedeutung sind auch die partiell oder vollständig veretherten Produkte der Kondensationsprodukte mit $C_1$-$C_4$-Alkanolen, vor allem mit Methanol, die man erhält, wenn man die Kondensation in Gegenwart des entsprechenden Alkanols vornimmt.

Unter den Komponenten Ia haben N,N'-Dimethylharnstoff, Ethylenharnstoff, 1,3-Propylenharnstoff sowie vor allem Harnstoff und ganz besonders Melamin die größte Bedeutung, und unter den Carbonylverbindungen Ib kommen neben Acetaldehyd in erster Linie Formaldehyd oder Formaldehyd liefernde Verbindungen wie Paraformaldehyd in Betracht.

Besonders in Betracht kommen auch wasserlösliche Melamin- oder Harnstoff-Formaldehydharze.

Im folgenden wird die Herstellung von wasserlöslichen Melamin- und/oder Harnstoff-Formaldehydharzen näher erläutert. Für sonstige wasserlösliche Harze dieser Art gelten grundsätzlich die gleichen Angaben.

Im Falle von Melamin/Formaldehyd-Harzen beträgt das Molverhältnis von Formaldehyd zu Melamin allgemein 1,5:1 bis 6:1, sowie vorzugsweise 2:1 bis 5:1 und im Falle von Harnstoff/Formaldehyd-Harzen liegen die entsprechenden Molverhältnisse zwischen 1:1 und 2:1, vorzugsweise zwischen 1,2:1 und 1,6:1. Für Harze die sowohl aus Melamin als auch aus Harnstoff aufgebaut sind, gelten je nach den Mengenanteilen dieser Komponenten entsprechende mittleren Werte.

Man nimmt die Kondensation wie üblich in wäßriger Lösung im neutralen oder schwach basischen Bereich, also etwa bei pH 7 bis 10, vorzugsweise bei 40 bis 100, besonders bei 50 bis 80°C vor. Es empfiehlt sich, Harnstoff bzw. Melamin zu einer 30 bis 40 gew.-%igen wäßrig-alkalischen Formaldehydlösung zu geben und die Lösung der umsetzungsprodukte auf eine Konzentration von 20 bis bis 80, vorzugsweise von 50 bis 80 Gew.-% zu stellen.

Man führt die Polykondensation, bei der sich zunächst die Methylolverbindungen des Harnstoffs bzw. des Melamins oder die Alkanolether dieser Methylolverbindungen bilden, vorzugsweise bis zur Bildung von dimeren bis höchstens tetrameren Kondensationsprodukten fort.

Man kann die Bildung der Komponenten I in Gegenwart der Komponenten II oder getrennt davon vornehmen.

2

EP 0 447 999 B1

Charakteristisch für die Copolymeren II sind die reaktiven Gruppen, die mit dem Aminoplast I reagieren können.

Solche Gruppen sind z.B. Carbonyl-, N-Methylol-, N-$C_1$-$C_4$-Alkoxymethyl-, $C_1$-$C_4$-Alkoxy-, Amino-, Carbonamido-, Carboxyl-, Hydroxyl- und vor allem Epoxygruppen.

In dem Copolymer kann eine oder mehrere der genannten reaktiven Gruppen vorliegen. Bevorzugt liegen Epoxy-, Carbonyl-, N-Methylol- und Aminogruppen vor, insbesondere liegen diese reaktiven Gruppen in Kombination mit Carboxyl- oder Hydroxylgruppen vor.

Besonders bevorzugt liegen Epoxygruppen im Copolymer vor, gegebenenfalls auch in Kombination mit Carboxylgruppen und/oder Hydroxylgruppen.

Die reaktiven Gruppen kann man durch polymeranaloge Umsetzung in das Polymere einführen, bevorzugt aber durch radikalische Copolymerisation von Monomeren IIa, welche diese Gruppen tragen.

Carbonylgruppen enthaltende Monomere sind z.B. ungesättigte Aldehyde und/oder Ketone, wie z.B. Acrolein, Methacrolein, Crotonaldehyd, Formylstyrol, Vinylmethylketon, Methylisopropenylketon, Diacetonacrylat, Diacetonacrylamin und/oder Butandiol-1,4-acrylacetylacetat. Durch Umsetzung von Copolymerisaten, die Monomere mit Carbonylgruppen enthalten, mit Hydrazin oder Dihydraziden, z.B. Adipinsäuredihydrazid, können Copolymerisate mit Hydrazogruppen erhalten werden.

N-Methylol- bzw. N-$C_1$-$C_4$-Alkoxymethylgruppen enthaltende Monomere sind z.B. N-Methylol(meth)-acrylamid oder N-Butoxymethyl(meth)acrylamid.

$C_1$-$C_4$-Alkoxygruppen enthaltende Monomere sind z.B. Alkoxy-(meth)acrylate.

Aminogruppen enthaltende Monomere sind z.B. (Meth)acrylester oder (Meth)acrylamide, wie z.B. Dimethylaminoethyl(meth)acrylat, Diethylaminoethyl(meth)acrylat, Dimethylaminoethyl(meth)acrylamid, Diethylaminoethyl(meth)acrylamid, Dimethylaminopropyl(meth)acrylamid oder N-tert.-butylaminoethyl(meth)-acrylat.

Carboxylgruppen enthaltende Monomere sind z.B. Acrylamidoglykolsäure oder Crotonsäure oder olefinisch ungesättigte Dicarbonsäuren, wie Maleinsäure, Fumarsäure, Itaconsäure oder entsprechende Dicarbonsäuremonoester, wie z.B. Maleinsäure- oder Fumarsäuremonoalkylester mit vorzugsweise 1 bis 4 Kohlenstoffatomen in den Alkylgruppen. Bevorzugt sind Acrylsäure oder Methacrylsäure.

Hydroxylgruppen enthaltende Monomere sind z.B. Hydroxyalkylacrylate oder Hydroxyalkylmethacrylate mit 2 bis 8, vorzugsweise 2 bis 4 Kohlenstoffatomen in den Alkylgruppen, wie Hydroxyethyl-(meth)acrylat, Hydroxypropyl-(meth)acrylat, Butandiol-1,4-mono-(meth)acrylat oder olefinisch ungesättigte Alkohole, wie Allylalkohol.

Epoxygruppen enthaltende Monomere sind z.B. Glycidylacrylat, Glycidylmethacrylat oder andere olefinisch ungesättigte Epoxyverbindungen, wie sie beispielsweise durch Umsetzung von Di-, Tri- oder Tetraepoxidverbindungen mit Acrylsäure oder Methacrylsäure hergestellt werden können. Bevorzugt sind Glycidylacrylat und Glycidylmethacrylat.

Man kann von verschiedenen Comonomeren IIa ausgehen, sofern sie sich bei der Copolymerisation nicht gegenseitig stören.

Der Anteil der Comonomeren IIa richtet sich danach, daß pro kg des Copolymerisats II 0,005 bis 5,0 Mol reaktive Gruppen, insbesondere 0,01 bis 4,0 Mol reaktive Gruppen vorhanden sind.

Bevorzugt werden 0,03 bis 0,7 Mol Epoxygruppen, gegebenenfalls in Kombination mit bis zu 2,0 mol Carboxylgruppen oder 3,0 Mol Hydroxylgruppen pro kg Copolymerisat II eingesetzt.

Neben den Comonomeren IIa ist das Copolymerisat aus Comonomeren IIb aufgebaut, die keine Gruppen merklicher Reaktionsfähigkeit enthalten.

Bevorzugte Comonomere IIb sind $C_1$-$C_8$-Acrylate, $C_1$-$C_4$-Methacrylate, (Meth-)acrylnitril, Vinylchlorid, Styrol und Butadien.

Daneben kommen u.a. auch Vinylester von 2 bis 4 Kohlenstoffatomen enthaltenden Carbonsäuren, wie z.B. Vinylacetat und Vinylpropionat oder Malein- bzw. Fumarsäuredialkylester mit 1 bis 4 Kohlenstoffatomen enthaltenden Monoalkanolen in Betracht.

Die Herstellung der wäßrigen Dispersion des Copolymeren kann nach üblichen Methoden durch Emulsionspolymerisation der Monomeren in wäßriger Dispersion in Gegenwart von ionischen oder nichtionischen Emulgatoren, wie sie etwa in "H. Stache, Tensid-Taschenbuch", Karl Hanser-Verlag 1979 beschrieben sind, z.B. Na-laurylsulfat, Na-dodecylbenzolsulfonat, Na-salze von sauren Schwefelsäureestern von Addukten aus Oktyl- oder Nonylphenol mit 5 bis 50 Mol Ethylenoxid, Addukte von Oktyl- oder Nonylphenol mit 5 bis 50 Mol Ethylenoxid, Fettalkohol-Ethylenoxidaddukte, Gemische von ionischen und nichtionischen Emulgatoren, Polymerisationsinitiatoren, wie z.B. Peroxidisulfate, gegebenenfalls Puffersubstanzen, wie $K_2P_2O_7$ bei Temperaturen zwischen 30 und 150 °C erfolgen. Geeignete Methoden zur Emulsionspolymerisation von Monomerengemischen sind beispielsweise in Houben-Weyl, Methoden der organischen Chemie, Band 14/1 beschrieben.

3

Der mittlere Teilchendurchmesser der durch Emulsionspolymerisation erhaltenen Copolymeren beträgt üblicherweise ca. 50 bis 300 nm.

Das Gewichtsverhältnis des wasserlöslichen Aminoplastharzes oder dessen Ausgangsverbindungen I) zum in Dispersion vorliegenden Copolymer II) kann in weiten Grenzen variiert werden. Auf 1 Gewichtsteil I können 0,5 bis 20, vorzugsweise 1 bis 5 Gewichtsteile II eingesetzt werden.

Die Mischung der Lösung der Komponenten I und der Dispersion der Komponenten II wird sodann bei schwach saurem oder alkalischem pH-Wert, vorzugsweise ein pH über 5, besonders bevorzugt ein pH zwischen 7 und 9, bei Temperaturen zwischen 20 und 200 °C, vorzugsweise zwischen 50 und 100 °C gehalten. Arbeitet man oberhalb 100 °C, so ist die Umsetzung in einem Druckgefäß unter des Eigendruck der Mischung durchzuführen.

Man setzt die Polykondensation von I und II höchstens so lange fort, bis das Umsetzungsprodukt gerade noch filmbildend ist, wie man durch Probenahme feststellen kann.

Da die Komponente I zumindest teilweise an die Teilchen von II gebunden wird, wodurch der Durchmesser der Teilchen II zunimmt, verarmt die wäßrige Lösung an I.

Man führt die Umsetzung mindestens soweit, bis mindestens 10 Gew.-%, vorzugsweise 30 Gew.-%, besonders bevorzugt mindestens 50 Gew.-% von I die wäßrige Phase verlassen haben. Der mittlere Teilchendurchmesser von II nimmt dabei um mindestens 2 %, insbesondere mindestens 10 % zu.

Die Umsetzung kann durch Abkühlen auf Raumtemperatur und Einstellen eines alkalischen pH-Werts, falls die Reaktion bei schwach saurem pH durchgeführt wurde, unterbrochen werden.

Die erhaltenen wäßrigen Dispersionen weisen eine erhöhte Raktivität auf und können in dieser Form oder zusammen mit hierfür üblichen Zusätzen wie Farbstoffen, Pigmenten, Hydrophobiermittel, Härtungsbeschleuniger, z.B. Ammoniumchlorid für die Beschichtung von Oberflächen und die Herstellung von Verbundwerkstoffen verwendet werden.

Die Aushärtung der Beschichtungen oder Verbunde kann bei Temperaturen zwischen 70 und 150 °C erfolgen. In Gegenwart eines Härtungsbeschleunigers, wie Ammoniumchlorid, können die Temperaturen deutlich niedriger, z.B., zwischen 70 und 100 °C gehalten werden.

Im Vergleich zu bisher bekannten Mischungen von wasserlöslichen Vorkondensaten und in Dispersion vorliegenden Copolymeren können bei den erfindungsgemäßen Bindemitteldisperionen die Aushärtungstemperaturen niedriger gehalten werden oder es kann auf den Zusatz eines Härtungsbeschleunigers verzichtet werden.

Die erhaltenen Beschichtungen weisen eine gute Abriebfestigkeit, Härte Elastizität und Lösemittelbeständigkeit auf.

Beispiel 1

a) Herstellung einer wäßrigen Dispersion des Copolymeren II durch Emulsionspolymerisation

Zu 30,6 g Wasser wurden zunächst 5 Gew.-% eines Gemisches ("Zulauf 1") aus

14,4 g Wasser
10,35 g n-Butylacrylat
16,2 g Styrol
7,65 g Methylmethacrylat
3,6 g Glycidylmethacrylat
7,2 g Hydroxyethylacrylat
2,14 g einer 35 %igen Lösung des Salzes eines Schwefelsäurehalbesters eines Addukts von ca. 25 mol Ethylenoxid von Nonylphenol

bei 85 °C gegeben. Danach wurde über 2,25 Stunden der Rest des Zulaufs 1 gleichzeitig mit einem Gemisch ("Zulauf 2") aus

0,225 g Kaliumperoxidisulfat und
6 g Wasser

zugegeben. Nach Zulaufende wurde die Temperatur noch 1 Stunde bei 85 °C gehalten und dann auf Raumtemperatur abgekühlt. Die erhaltene Dispersion hatte einen Feststoffgehalt von ca. 46 %. Der mittlere Teilchendurchmesser betrug ca. 250 nm.

b) Herstellung einer erfindungsgemäßen wäßrigen Bindemitteldispersion mit einem wasserlöslichen Melamin/Formaldehyd-Harz.

68 g der Dispersion aus 1a) wurden in einem Kolben vorgelegt und mit ca. 2.05 g einer 10 %igen wäßrigen Lösung von Dimethylethanolamin auf eine pH-Wert zwischen 7 und 8 eingestellt. In dieser Mischung wurden unter Rühren 19.4 g eines wasserlöslichen, mit Methanol veretherten Melamin/ Formaldehyd-Vorkondensats (Melamin/Formaldehyd 1:3,7; Feststoffgehalt 70 %, Luwipal®063, BASF) und 10 g Wasser gegeben. Die erhaltene Dispersion wurde auf 80°C aufgeheizt. Der pH-Wert wurde in der folgenden Stunde durch Zugabe von insgesamt weiteren 0.7 g der 10%igen Dimethylethanolaminlösung zwischen 7 und 8 gehalten. Nach einer Stunde wurde der Ansatz auf Raumtemperatur abgekühlt.

Die erhaltene Dispersion weist einen Feststoffgehalt von ca. 44% auf, der mittlere Teilchendurchmesser betrug 300 nm.

c) Herstellung eines Klarlacks für Beschichtungen von Metalloberflächen

Durch Abmischung folgender Bestandteile wurde ein Klarlack hergestellt:
239.8 g der in Beispiel 1b) erhaltenen Dispersion
5.3 g Hexyldiglykol
5.3 g Butyldiglykol
1.3 g einer 35%igen Lösung eines Schwefelsäurehalbesters eines Addukts von ca. 25 Mol Ethylenoxid an Nonylphenol (POS)
1.1 g 2,4,7,9-Tetramethyl-5-decin-4,7-diol (50 %ig in Ethylenglykol)
0.6 g eines Korrosionsinhibitors (Inhibitor 562 der Produit Chimique Lombard-Gerin)
3.0 g eines mit Polyurethan modifizierten Verdickers Collacral® PU 85, BASF)
Mit Triethanolamin wurde ein pH-Wert von 9,2 eingestellt.

Der erhaltene Klarlack wurde mit einer Rakel auf unbehandelte entfettete Stahlbleche aufgetragen, so daß die Schichtdicke nach dem Einbrennen ca. 40 nm betrug. Die Beschichtungen wurden 30 Minuten bei jeweils unterschiedlichen Temperaturen zwischen 80 und 180°C eingebrannt. Am eingebrannten Lack wurden die mechanischen Eigenschaften bestimmt.

Die Bestimmung der Pendeldämpfung erfolgte gemäß DIN 53157.
Die Erichsentiefungswerte wurden nach DIN ISO-1520 bestimmt.
Die Gitterschnitt-Prüfung erfolgt nach DIN 53156.
Ergebnisse siehe Tabelle 2.

Vergleichsversuch 1

Durch Abmischung folgender Bestandteile wurde ein Klarlack hergestellt.
152.8 Teile der in Beispiel 1a erhaltenen Dispersion (Feststoffgehalt 46 %)
42.9 Teile eines wasserlöslichen, mit Methanol veretherten Melamin/Formaldehyd-Vorkondensats,
(Molverhältnis Melamin/Formaldehyd 1:3,7; Feststoffgehalt 70 %; Luwipal® 063, BASF)
5.4 Teile Hexyldiglykol
5.4 Teile Butyldiglykol
1.3 Teile POS
1.1 Teile 2,4,7,9-Tetramethyl-5-decin-4,7-diol (50%ig in Ethylenglykol)
0.6 Teile eines Korrosionsinhibitors (Inhibitor 562 der Produit Chimique Lombard-Gerin)
3.2 Teile eines mit Polyurethan modifizierten Verdickers (Collacrol® PU 85, BASF)
Mit Triethanolamin wurde ein pH-Wert von 9,2 eingestellt.

Mit diesem Klarlack wurden Beschichtungen auf Stahlbleche aufgetragen und anwendungstechnisch geprüft (s. Tabelle 2).

Tabelle 1

| Klarlack aus | Gewichtsverhältnis Melamin-Formaldehydvorkondensat I zu Copolymer II | pH-Wert |
|---|---|---|
| Beispiel 1 | 30/70 | 9,2 |
| Vergleichsbeispiel 1 | 30/70 | 9,2 |

Tabelle 2

Prüfergebnisse an Beschichtungen
auf Stahloberflächen
Einbrenntemperaturen / °C

| | | 80 | 89 | 100 | 111 | 123 | 134 | 144 | 157 | 168 | 179 |
|---|---|---|---|---|---|---|---|---|---|---|---|
| Klarlack aus | Schichtdicke [$\mu$m] | 1) | | | 36 | 37 | 37 | 36 | 34 | 34 | 35 |
| Vgl.Bsp. 1 | Pendeldämpfung [_] | | | | 10 | 92 | 113 | 113 | 113 | 121 | 127 |
| | Erichsentiefung [mm] | | | | 9,9 | 9,0 | 8,8 | 7,3 | 5,8 | 5,0 | 4,7 |
| | Gitterschnitt [Note] | 0 | 0 | 0 | 0 | 0 | 0 | 0 | 0 | 0 | 0 |
| Klarlack aus | Schichtdicke [$\mu$m] | 32 | 36 | 37 | 33 | 33 | 35 | 34 | 38 | 32 | 28 |
| Beispiel 1c | Pendeldämpfung [_] | 23 | 33 | 73 | 117 | 127 | 125 | 139 | 140 | 141 | 147 |
| | Erichsentiefung [mm] | >10 | >10 | >10 | 0,7 | 0,7 | 8,7 | 8,2 | 7,2 | 6,8 | 6,0 |
| | Gitterschnitt [Note] | 0 | 0 | 0 | 0 | 0 | 0 | 0 | 0 | 0 | 0 |

1) Bei Einbrenntemperaturen von 80 bis 100°C konnten mit dem Klarlack aus
Vergleichsbeispiel 1 keine ausgehärteten Beschichtungen erhalten werden

EP 0 447 999 B1

EP 0 447 999 B1

**Patentansprüche**

1. Wäßrige Bindemitteldispersionen, erhältlich durch Umsetzung von

   a) 1 Gewichtsteil eines wasserlöslichen Aminoplastharzes oder dessen Ausgangsverbindungen (Komponente I) mit

   b) 0,5 bis 20 Gewichtsteilen eines in wäßriger Dispersion vorliegenden Copolymeren (Komponente II), welches pro kg 0,005 bis 5,0 Mol reaktive Gruppen enthält, die mit den reaktiven Gruppen der Komponente I eine Kondensations- oder Additionsreaktion eingehen können,

   in schwach saurem oder basischen Milieu bis zu einem Umsetzungsgrad, bei dem mindestens 10 Gew.-% der Komponente I aus der wäßrigen Lösung in die disperse Phase übergegangen sind und dessen Obergrenze dadurch definiert ist, daß die erhaltene Dispersion gerade noch filmbildend ist.

2. Wäßrige Bindemitteldispersionen nach Anspruch 1, erhältlich durch Umsetzung der Komponente I und II bei einem pH-Wert von 7 bis 9 und bei einer Temperatur von 50 bis 100°C.

3. Wäßrige Bindemitteldispersionen nach Anspruch 1 oder 2, erhältlich aus wasserlöslichen Melamin/Formaldehyd- oder Harnstoff/Formaldehyd-Harzen oder deren Ausgangsverbindungen als Komponente I.

4. Wäßrige Bindemitteldispersionen nach den Ansprüchen 1 bis 3, erhältlich aus solchen Copolymeren als Komponente II, deren reaktive Gruppen Epoxygruppen sind, welche über Glycidylacrylat oder -methacrylat in das Copolymere eingeführt werden.

5. Verfahren zur Herstellung wäßriger Bindemitteldisperionen gemäß Anspruch 1, dadurch gekennzeichnet, daß die Herstellung gemäß den in Anspruch 1 genannten Maßnahmen vorgenommen wird.

6. Verwendung der wäßrigen Bindemittellösungen gemäß den Ansprüchen 1 bis 4 zur Herstellung von härtbaren Zubereitungen für die Beschichtung von Oberflächen und zur Herstellung von Verbundwerkstoffen.

7. Hitzehärtbare Zubereitungen für die Beschichtung von Oberflächen und die Herstellung von Verbundwerkstoffen, enthaltend die Bindemitteldispersionen gemäß den Ansprüchen 1 bis 4.

**Claims**

1. An aqueous binder dispersion obtainable by reacting

   a) 1 part by weight of a water-soluble amino resin or its starting compounds (component I) with

   b) from 0.5 to 20 parts by weight of a copolymer in aqueous dispersion (component II) containing per kg from 0.005 to 5.0 mol of reactive groups capable of undergoing a condensation or addition reaction with the reactive groups of component I,

   in a weakly acid or basic medium until at least 10 % by weight of component I has transferred from the aqueous solution into the disperse phase but not for longer than the dispersion obtained is still just film-forming.

2. An aqueous binder dispersion as claimed in claim 1, obtainable by reacting components I and II at pH 7-9 at 50-100°C.

3. An aqueous binder dispersion as claimed in claim 1 or 2, obtainable from a water-soluble melamine/formaldehyde or urea/formaldehyde resin or starting compounds thereof as component I.

4. An aqueous binder dispersion as claimed in claim 1 or 2 or 3, obtainable from a copolymer as component II whose reactive groups are epoxy groups introduced into the copolymer via glycidyl acrylate or methacrylate.

5. A process for preparing an aqueous binder dispersion as claimed in claim 1, which comprises effecting the preparation by the measures mentioned in claim 1.

7

6. The use of an aqueous binder dispersion as claimed in claim 1 or 2 or 3 or 4 for preparing a curable formulation for the coating of a surface or for preparing a composite material.

7. A heat-curable formulation for the coating of a surface or for preparing a composite material, containing a binder dispersion as claimed in claim 1 or 2 or 3 or 4.

**Revendications**

1. Dispersions aqueuses de liants, que l'on peut obtenir par la réaction de

   a) 1 partie en poids d'une résine aminoplaste soluble dans l'eau, ou ses composés de départ (composant I) avec

   b) 0,5 à 20 parties en poids d'un copolymère se présentant sous forme de dispersion aqueuse (composant II), qui contient 0,005 à 0,5 mole de radicaux réactifs par kg, qui sont susceptibles de subir une réaction de condensation ou d'addition avec les radicaux réactifs du composant I,

   en milieu faiblement acide ou basique, jusqu'à un degré de conversion pour lequel au moins 10% en poids du composant I sont passés de la solution aqueuse dans la phase dispersée et dont la limite supérieure est définie par le fait que la dispersion obtenue demeure encore nettement filmogène.

2. Dispersions aqueuses de liants suivant la revendication 1, que l'on peut obtenir par la réaction des composants I et II à une valeur de pH de 7 à 9 et à une température de 50 à 100°C.

3. Dispersions aqueuses de liants suivant la revendication 1 ou 2, que l'on peut obtenir à partir de résines de mélamine/formaldéhyde ou d'urée/formaldéhyde, solubles dans l'eau ou de leurs composés de départ, à titre de composant I.

4. Dispersions aqueuses de liants suivant l'une quelconque des revendications 1 à 3, que l'on peut obtenir à partir de copolymères tels que le composant II, dont les radicaux réactifs sont des groupes époxy, qui sont introduits dans le copolymère par l'intermédiaire de l'acrylate ou du méthacrylate de glycidyle.

5. Procédé de préparation de dispersions aqueuses de liants suivant la revendication 1, caractérisé en ce que l'on entreprend la préparation selon le mode opératoire présenté dans la revendication 1.

6. Utilisation de solutions aqueuses de liants suivant l'une quelconque des revendications 1 à 4 en vue de la réalisation de préparations durcissables pour le revêtement de surfaces et pour la fabrication de stratifiés.

7. Préparations thermodurcissables pour le revêtement de surfaces et la fabrication de stratifiés, contenant les dispersions de liants suivant l'une quelconque des revendications 1 à 4.